# EUROPEAN PATENT SPECIFICATION

(11) **EP 3 236 393 B1**
(45) Date of publication and mention of the grant of the patent: **13.10.2021**
(21) Application number: 16305453.9
(22) Date of filing: 20.04.2016
(51) Int. Cl.: G06K 19/07

(54) **CONTROL OF AN EXTERNAL INTERFACE ON A CARD**
STEUERUNG EINER EXTERNEN SCHNITTSTELLE AUF EINER KARTE
COMMANDE D'UNE INTERFACE EXTERNE SUR UNE CARTE

(43) Date of publication of application: 25.10.2017
(73) Proprietor: IDEMIA France, 92400 Courbevoie (FR)
(72) Inventor: AUBIN, Yann-Loïc, 92700 Colombes (FR); COURTOIS, Christophe, 92700 Colombes (FR); LESEIGNEUR, Gilles, 92700 Colombes (FR)
(74) Representative: Santarelli

(56) References cited:
- EP-A1- 2 287 730
- WO-A2-2009/143076
- US-A1- 2004 124 246

## Description

### BACKGROUND

Integrated circuit cards (ICC), or chip cards, are in widespread use. Chip cards typically support a contact interface in which an electrical connection is made between an external reader and conductive pads on the surface of the chip card or a contactless interface in which a wireless (near field communication) connection is made between an external reader and an antenna within the chip card. A payment application executed by the chip card may communicate with the external card reader via the contact interface or the contactless interface.

There is some concern that cards equipped with a contactless interface may be read without the card holder being aware of the fact. This opens up the possibility of fraudulent transactions or denial of service attacks. One known solution to this problem is to provide a card with a switch which can turn on the contactless interface. This can prevent a fraudulent reader from being able to read a card whilst it is in the card holder's pocket for example.

US 2003/0132301 A1 describes a radio operated data card with a manually operated switch for enabling and disabling an RFID card. A card of the type described in US 2003/0132301 A1 requires a user to continually apply pressure to the card to enable data transfer to occur. US 2004/124246 describes an access card enabling a card reader interface if authentication data is validate. This prior art is reflected in the preamble of claim 1.

### SUMMARY

The invention is set out in claims 1 and 11.

The first mode may be a mode which was selected during a previous usage period.

The card may be configured to: detect a second operation of the user input element; and if no second operation of the user input element is detected, to select the first mode for use within the time-limited usage period.

The card is configured to: detect a second operation of the user input element; and if a second operation of the user input element is detected to indicate, via the user interface, a different one of the plurality of modes for use during the time-limited usage period.

The card may be configured to: if the second operation of the user input element is detected, to: indicate a different one of the plurality of modes for use during the time-limited usage period; wait for operation of the user input element; if no operation of the user input element is detected, to select that mode for use during the time-limited usage period.

The card may be configured to: if the second operation of the user input element is detected, to begin an automated sequence through the plurality of modes, the automated sequence comprising: indicating, via the user interface, one of the plurality of modes for use during the time-limited usage period; waiting for operation of the user input element; if operation of the user input element is detected, selecting that mode for use during the time-limited usage period.

Each mode may be associated with a single one of the applications.

The card may have a contact external interface and a contactless external interface, and each mode may be associated with: a number N_{CT} of the applications for use by the contact external interface in that mode, where N_{CT}≥0; and a number N_{CTL} of the applications for use by the contactless external interface in that mode, where N_{CTL}≥0.

The card may have a contact external interface and a contactless external interface and the card may be configured to enable at least one of the contact external interface and the contactless external interface per mode.

The card may be configured to: detect an end of a communication transaction between the card and the external card reader; and disable the at least one external interface when the end of the communication transaction has been detected.

The card may be configured to send response data corresponding to the number N of applications associated with the selected mode when the card is interrogated by the external reader.

Another aspect provides a method of operating a card comprising a secure element, at least one external interface for communicating between the secure element and an external card reader, and a user interface with a user input element, the method comprising: hosting plurality of applications on the secure element; detecting operation of the user input element; indicating, via the user interface, a first mode in response to a detected operation of the user input element, wherein there is a plurality of user-selectable modes, each mode associated with a number N of the applications, where N≥0; selecting one of the plurality of modes for use during for the time-limited usage period; enabling the external interface for the time-limited usage period; and disabling the external interface at an end of the time-limited usage period.

The first mode may be a mode which was selected during a previous usage period.

The method further comprises: detecting a second operation of the user input element; and if a second operation of the user input element is detected indicating, via the user interface, a different one of the plurality of modes for use during the time-limited usage period.

The card may have a contact external interface and a contactless external interface and the method may comprise enabling at least one of the contact external interface and the contactless external interface per mode.

An advantage of at least one example is that a user does not need to press and hold a switch for a period that the external interface (e.g. contactless interface) is required to be turned on.

An advantage of at least one example is that the external interface (e.g. contactless interface) is automatically turned off after a limited period of time. This provides improved protection.

An advantage of at least one example is that one or more of the external interfaces required by the selected mode are automatically turned on.

An advantage of at least one example is that a user is only required to operate a single user input element (e.g. a single button) on the card to perform the actions of selecting a mode and of controlling the external interface.

An advantage of at least one example is that the user interface may have a minimum of a single user input element thereby reducing the cost of the interface.

The functionality described here can be implemented in hardware, software executed by a processing apparatus, or by a combination of hardware and software. The processing apparatus can comprise a computer, a processor, a state machine, a logic array or any other suitable processing apparatus. The processing apparatus can be a general-purpose processor which executes software to cause the general-purpose processor to perform the required tasks, or the processing apparatus can be dedicated to perform the required functions. Another aspect provides machine-readable instructions (software) which, when executed by a processor, perform any of the described methods. The machine-readable instructions may be stored on an electronic memory device, hard disk, optical disk or other machine-readable storage medium. The machine-readable medium can be a non-transitory machine-readable medium. The term "non-transitory machine-readable medium" comprises all machine-readable media except for a transitory, propagating signal. The machine-readable instructions can be downloaded to the storage medium via a network connection.

### BRIEF DESCRIPTION OF THE DRAWINGS

Embodiments of the invention will be described, by way of example only, with reference to the accompanying drawings in which:
Figure 1 schematically shows a card with a secure element and a user interface;
Figure 2 shows a method of operating the card;
Figure 3 shows a time line of operating the card;
Figure 4 shows an example of the mode selection stage;
Figure 5 shows a sequence of user interface diagrams for the mode selection stage of Figure 4;
Figure 6 shows another example of the mode selection stage;
Figure 7 shows a sequence of user interface diagrams for the mode selection stage of Figure 6;
Figure 8 shows a method of operating the card with detects an end of a transaction;
Figure 9 shows a secure element of the card in more detail;
Figure 10 shows an example of how mode selection at the user interface is mapped to response data for sending to an external reader.

### DETAILED DESCRIPTION

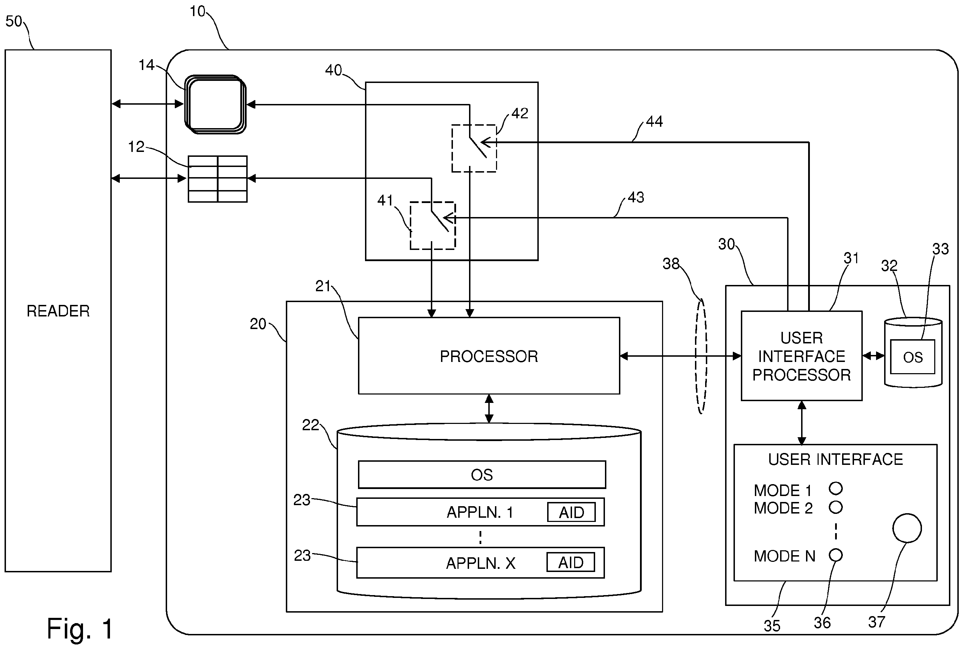

Figure 1 schematically shows an example of an integrated circuit card (ICC) 10, or chip card, with a user interface. The chip card 10 comprises a secure element 20 and a user interface section 30.

The user interface section 30 can be in the form of a separate circuitry card which is housed within the body of the card 10. In this example the user interface section 30 comprises a microprocessor 31 which is operatively connected to a user interface 35 comprising a set of LEDs 36 and a button 37. The user interface section 30 may alternatively be called an LED card. An internal interface 38 is provided between the user interface section 30 and the secure element 20. In a preferred arrangement, the user interface section 30 also comprises a battery (not shown). The battery can allow the card to function when the card is not powered via an external card reader 50.

The secure element 20 comprises a processor 21 and storage 22. The secure element 20 is connected to at least one external interface 12, 14. The external interface(s) 12, 14 allow the card to communicate with an external card reader 50. The external interface(s) may be a contact interface 12 or a contactless interface 14. The secure element 20 may be provided with just a contact interface 12 or just a contactless interface 14, or the secure element 20 may be provided with both a contact interface 12 and a contactless interface 14. Communication with the external card reader 50 is typically via ISO 7816 APDUs. Communication between the card 10 and the external card reader 50 may be authenticated, or the communication may not be authenticated.

Communication between the secure element 20 and the user interface section 30 over the internal interface 38 can also be in the form of ISO 7816 Application Protocol Data Units (APDU). In effect, the user interface section 30 operates as a specialised card reader integrated into the card 10.

The user interface processor 31 executes an operating system 33. The operating system 33 allows a user of the card 10 to select an operating mode. The card may support a total of M operating modes, where M is an integer greater than or equal to 1. For example, M=5. Each of the M operating modes can correspond to a number N of applications 23 hosted by the secure element 20, where N is an integer, and N≥0. In a simplest case of a card with a single external interface a mode can correspond to a number N of applications for use by that single external interface. In a case of a card with multiple interfaces, such as a contact external interface 12 and a contactless external interface 14, a mode can correspond to a number N_{CT} of applications for use by the contact interface 12 and a number N_{CTL} of applications for use by the contactless interface 14. For example: operating mode 1 may make available a credit application via the contact interface and a credit application via the contactless interface; operating mode 2 may make available a debit application via the contact interface and no application via the contactless interface. An operating mode may make multiple applications available for use by an external interface.

As will be explained in more detail below, communication between the user interface processor 31 and the secure element 20 comprises an indication of a mode selected by a user. Authentication is not required between the user interface processor 31 and the secure element 20 because secure data is not communicated between them. This means that the user interface processor 31 and the secure element 20 do not need to hold common or corresponding cryptographic keys, which provides a significant saving in key management when the total volume of cards in circulation is considered (e.g. hundreds of thousands or millions of cards).

The secure element 20 can store a plurality of applications 23. Figure 1 shows X applications, where X is an integer. Each application may be Europay, MasterCard, and Visa (EMV) compliant. Each application has an Application Identifier (AID).

The contact interface 12 and/or the contactless interface 14 can be enabled under the control of the card. In Figure 1, a switch unit 40 is located in the communication path between the secure element 20 and the interfaces 12, 14. A switch 41 is located in the path between the contact interface 12 and the secure element 20. A switch 42 is located in the path between the contactless interface 14 and the secure element 20. The switches 41, 42 can be implemented in various ways. For example, switches 41, 42 can comprise one or more transistors which selectively open and close the communication path. In this example, the switch unit 40 is controlled by signals 43, 44 from the user interface section 30. User interface processor 31 outputs a control signal 43 to control switch 41 to selectively enable/disable the contact interface 12. User interface processor 31 outputs a control signal 44 to control switch 42 to selectively enable/disable the contactless interface 14.

The contact interface 12 and/or the contactless interface 14 can be enabled on a per mode basis. Data stored on the card indicates whether the contact interface 12 and/or the contactless interface 14 is required for a particular mode. This data can be stored in storage 22 of the secure element 20. As part of the communication between the user interface section 30 and the secure element 20, the user interface section 30 may receive data which indicates whether the contact interface 12 and/or the contactless interface 14 should be turned on/off for the selected mode.

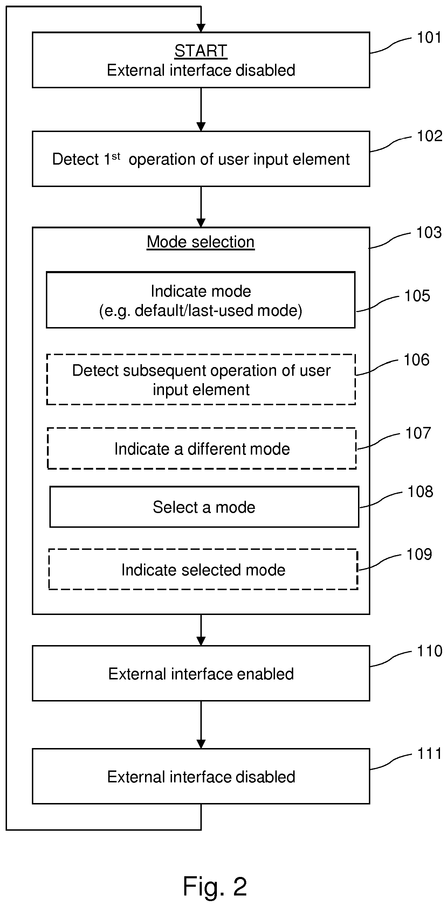

Figure 2 shows a method of operating a card. The method allows a user to select one of the plurality of modes for use within a time-limited usage period. Each of the modes is associated with a number N of applications which are available for use in that mode. A user is required to select a mode (and thereby an application, or applications) each time they wish to use the card. After a time-limited usage period the external interface is disabled, or the external interfaces are disabled. This secures the card. The user is required to re-select an operating mode to activate the external interface(s). The method begins at block 101. The at least one external interface (e.g. contactless interface) is disabled at this time. Block 102 detects a first operation of a user input element on the card. The user input element can be the button 37 in Figure 1. This first operation of the user input element wakes up the card. The method proceeds to a mode selection stage 103. The method indicates to the user a first mode selected from the plurality of modes. In a card of the type shown in Figure 1 with a set of LEDs, the card may light an LED alongside a printed indication of a mode. In a card with a more elaborate display, the card may display a name or symbol indicating a mode. Examples of the first mode are: a default mode; the last-used mode. The "last-used mode" is the mode last selected when the card was last used by the user.

The card supports multiple modes. It is possible that a user may wish to select a different mode from the one initially indicated. The mode selection stage allows the user to select a different mode. There are several ways in which this can be achieved. Methods are shown in more detail below. In summary, the method detects one or more subsequent operations of the user input element (block 106). The method can indicate a different mode (block 107). The method selects one of the modes for use during for the time-limited usage period execution based on detected operations of the user input element, at block 108. Optionally, at block 109 the method can indicate the selected application via the user interface. For example, the user interface of Figure 1 may flash the LED associated with the selected mode. Another possibility is to provide a user interface with a multi-colour indicator for each mode. When a mode is selected the colour of the indicator is changed. The multi-colour indicator can comprise a plurality of LEDs, such as a cluster of red, green and blue LEDs.

At block 110 the at least one external interface is enabled for a time-limited usage period. Subsequently, at block 111, the method disables the at least one external interface at an end of the time-limited usage period.

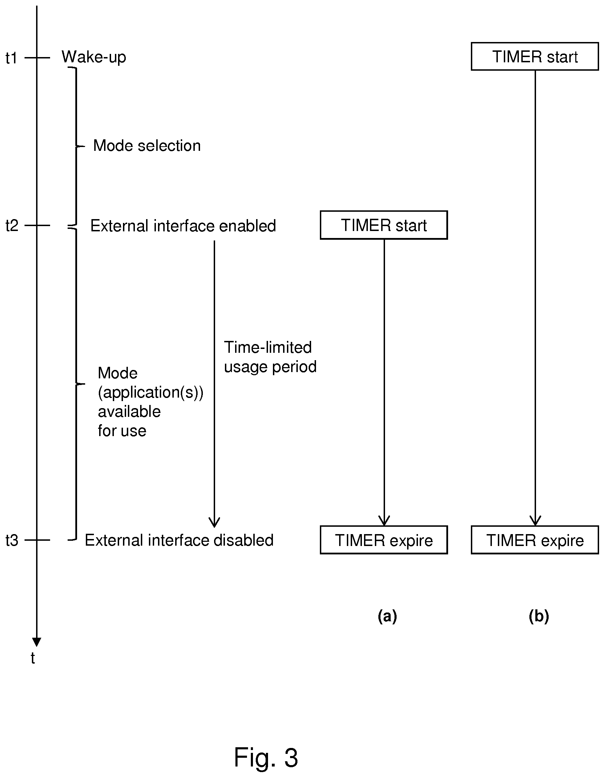

Figure 3 shows a time line of the card operation. At time t1 the card wakes up. Time t1 can correspond to detecting operation of the user input element at block 102, Figure 2. Period t1 - t2 corresponds to the mode selection stage (block 103, Figure 2). At time t2 the external interface is enabled (block 110, Figure 2). The selected mode is available for use during the time-limited usage period t2 - t3. During the period t2 - t3 the card will respond to an external card reader 50. The card will provide details of the applications associated with the selected mode. At time t3 the external interface is disabled (block 111, Figure 2). From time t3, the card will not respond to an external card reader 50. A user must operate the user input element again to re-select a mode and enable the external interface(s).

The time-limited usage period may be controlled by a timer. In option (a), the timer starts at time t2 when the external interface is enabled. The period of the timer is the same as the time-limited usage period for the selected mode. In option (b) the timer starts at time t1. In both (a) and (b) the timer determines an end time t3.

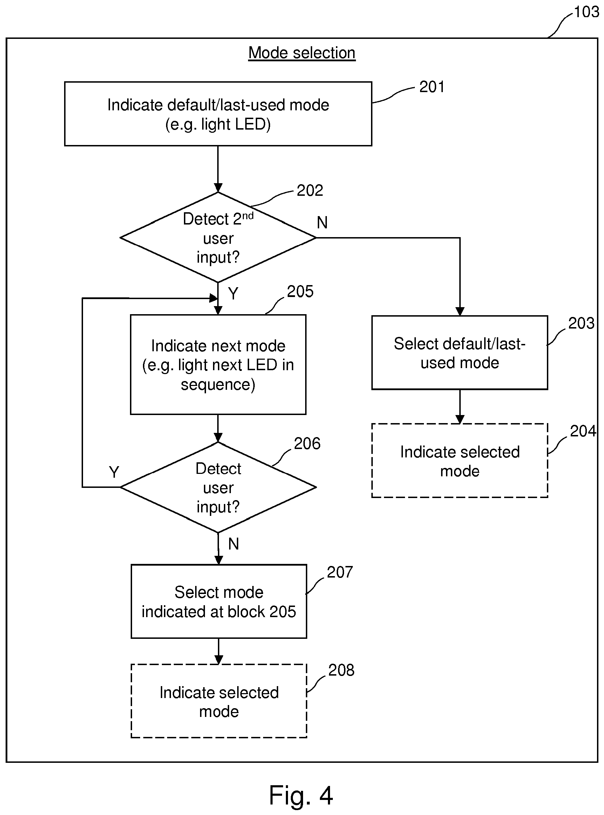

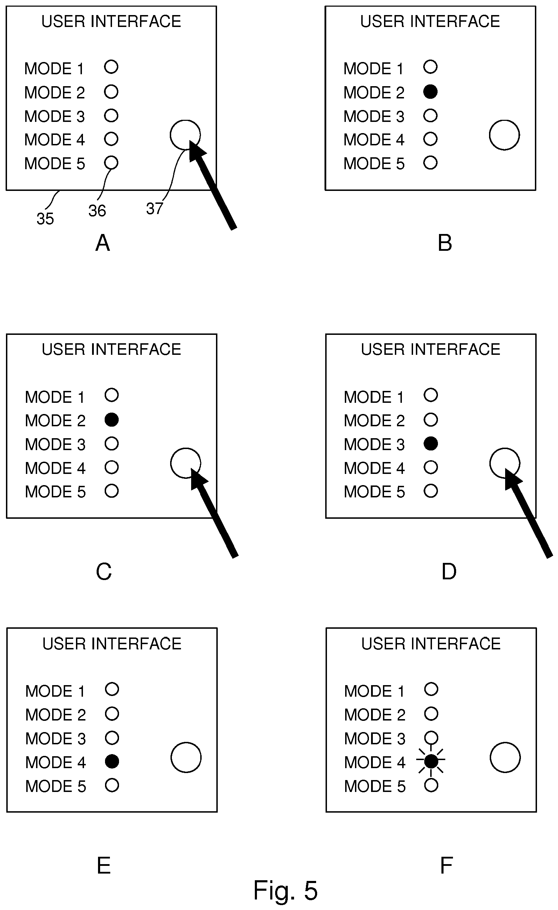

Figures 4 and 5 show one possible method for implementing mode selection. This corresponds to block 103 of Figure 2. At block 201 the method indicates to the user a first mode selected from the plurality of modes. As explained above the first mode may be the last-used mode or a default mode. At block 202 the method detects if there is a second operation of the user input element. If an operation is not detected, the method proceeds to block 203 and selects the mode indicated at block 201 (e.g. the last-used or default mode). Optionally, the selected mode is indicated via the user interface at block 204. Returning to block 202, if an operation of the user input element is detected, the method proceeds to block 205. The method indicates the next application in the plurality of modes. For the user interface of Figure 1 the method may illuminate the LED associated with the next mode. Block 206 detects if there is a further operation of the user input element. If an operation is not detected, the method proceeds to block 207 and selects the mode indicated at block 205. Optionally, the selected mode is indicated via the user interface at block 208. If an operation is detected, the method returns to block 205 and selects the next mode. The method is repeated until no operation is detected at block 206.

Figure 5 shows a sequence of drawings A-F of the user interface for the method of Figure 4. In this example there are five modes (MODE 1 - MODE 5). Each mode is associated with a number of applications. It is assumed that the user wants to use application/mode 4. At step A, the user presses the user input element for the first time. This causes the user interface to indicate the last-used mode which, in this example, is mode 2 (step B). The user does not want mode 2, so they press the user input element again (step C). This causes the user interface to indicate the next mode (mode 3) at step D. The user presses the user input element again. This causes the user interface to indicate the next mode (mode 4) at step E. The user interface does not detect any further press of the user input element and therefore determines that the user wishes to select the currently indicated mode, mode 4. The user interface confirms this selection at step F by flashing the indicator for mode 4.

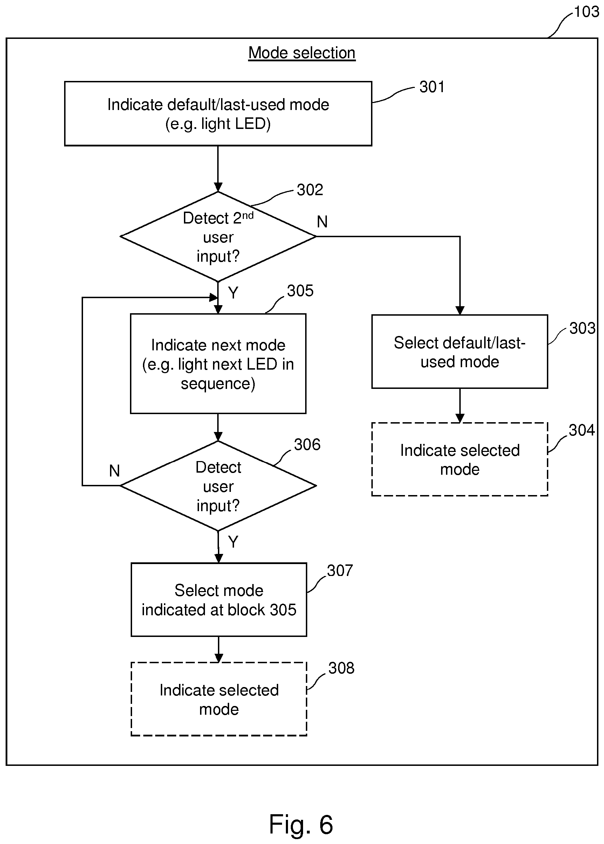

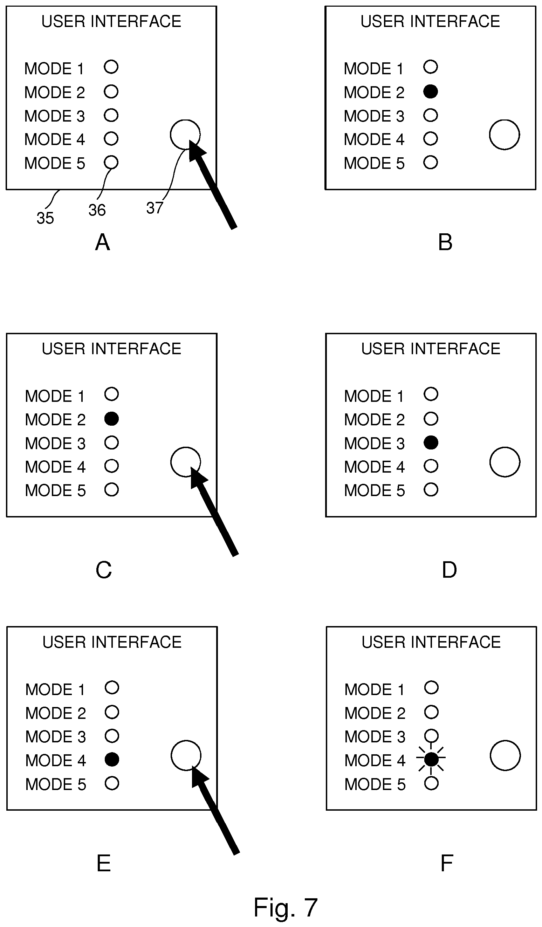

Figures 6 and 7 show another possible method for implementing mode selection. This corresponds to block 103 of Figure 2. The method begins in a similar way to Figure 4. At block 301 the method indicates to the user a first mode selected from the plurality of modes. As explained above the first application may be the last-used mode or a default mode. At block 302 the method detects if there is a second operation of the user input element. If an operation is not detected, the method proceeds to block 303 and selects the mode indicated at block 301 (e.g. the last-used or default application). Optionally, the selected mode is indicated via the user interface at block 304. Returning to block 302, if an operation of the user input element is detected, the method proceeds to block 305. The method begins an automated sequence through the plurality of modes. Block 305 indicates the next mode in the plurality of modes. Block 206 detects if there is a further operation of the user input element. If an operation is detected, the method proceeds to block 207 and selects the mode indicated at block 305. Optionally, the selected mode is indicated via the user interface at block 308. If an operation is not detected, the method returns to block 305 and automatically advances to the next mode. The method is repeated until an operation is detected at block 306. The mode selection stage may time out if the user has not selected a mode after a predetermined period of time.

Figure 7 shows a sequence of drawings A-F of the user interface for the method of Figure 6. In this example there are five modes (MODE 1 - MODE 5). Each mode is associated with a number of applications. It is assumed that the user wants to use mode 4. At step A, the user presses the user input element for the first time. This causes the user interface to indicate the last-used mode which, in this example, is mode 2 (step B). The user does not want mode 2, so they press the user input element again (step C). This begins the automated sequence through the modes. The user interface indicates the next mode (mode 3) at step D. After a pause, the user interface automatically proceeds to indicate the next mode (mode 4) at step E. As the user wants mode 4, they press the user input element again. This causes the automated sequence to stop at mode 4. The user interface confirms this selection at step F by flashing the indicator for mode 4.

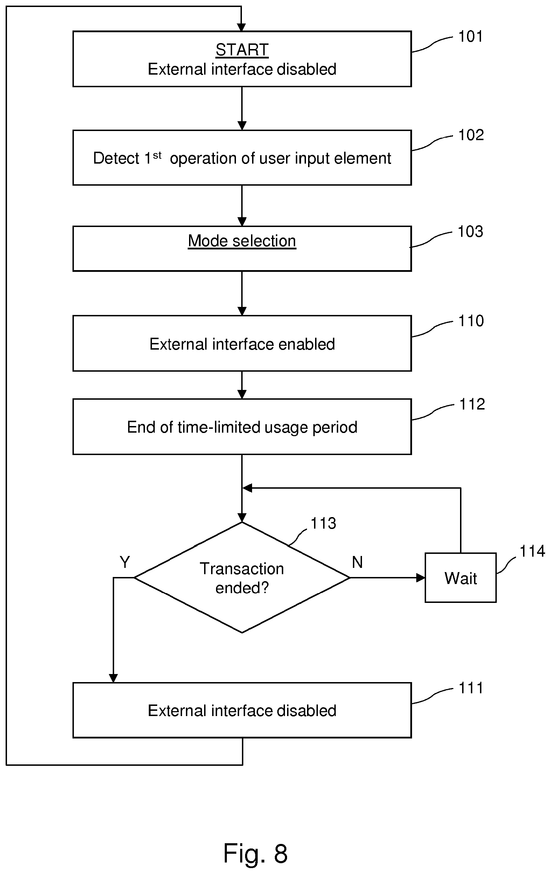

An alternative method is shown in Figure 8. The method is similar to the method shown in Figure 2, and similar blocks have the same labels. The method of Figure 8 determines an end of the time-limited usage period at block 112. For example, the timer shown in Figure 3 (option (a) or option (b)) expires. The method detects if the transaction has ended before disabling the interface(s). Block 113 checks if the transaction has ended. If the transaction has ended, the method proceeds to block 111 and disables the external interface. If the transaction has not ended, the method waits at block 114 before returning to check if the transaction has ended. The external interface is disabled when the transaction has ended. There are various ways of detecting when a transaction has ended. If monitoring is performed by the user interface section 30, a monitoring unit (e.g. provided in the user interface section 30) can monitor activity on the communication path between the external interface 12, 14 and the secure element 20. The monitoring unit can connect to the path between the external interface 12, 14 and the secure element 20. Another way is to provide a monitoring unit (e.g. provided in the user interface section 30) and a separate detector (e.g. a separate antenna) which can listen in to communication between the secure element 20 and the external card reader. When communication has ceased, this indicates the transaction has ended. An advantage of the method shown in Figure 8 is that it prevents a transaction from being prematurely ended. This is useful in situations where a user selects a mode, but waits a short while before using the card to perform a transaction. It avoids the need for the user to reselect the required mode.

The following section describes, in more detail, how a user-selected mode is mapped to a number of applications available for use by the card.

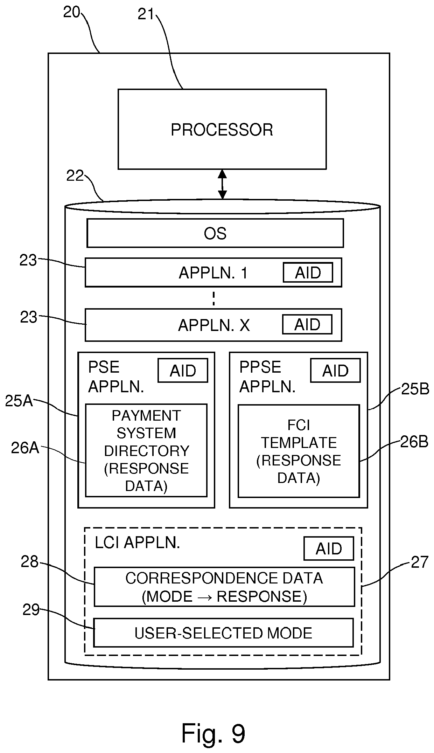

Figure 9 shows the secure element 20 in more detail. The secure element 20 stores a Payment System Environment (PSE) application 25A, a Proximity Payment System Environment (PPSE) application 25B, and an LED Card Interface (LCI) Application 27. PSE is defined in "EMV® Integrated Circuit Card Specifications for Payment Systems Book 1 Application Independent ICC to Terminal Interface Requirements", published by EMVCo. PPSE is defined in "EMV® Contactless Specifications for Payment Systems Book B Entry Point Specification", published by EMVCo. The PSE application 25A is an entry point for an external card reader 50 when the card is interrogated via the contact external interface 12. The PSE application 25A comprises a data structure 26A. This data structure 26A comprises information about applications supported by the card and is called a Payment System Directory under PSE. This data structure 26A comprises response data which can be sent to the external card reader 50. Similarly, the PPSE application 25B is an entry point for an external card reader 50 when the card is interrogated via the contactless external interface 14. The PPSE application 25B comprises a data structure 26B. This data structure 26B comprises information about applications supported by the card and is called a File Control Information (FCI) template under PPSE. The data structure 26B comprises response data which can be sent to the external card reader 50. In this specification, the general term "response data" is used to represent stored data about applications which may be sent to an external card reader 50.

The secure element 20 stores an indication 29 of an operating mode selected by a user via the user interface section 30. The secure element 20 also stores correspondence data, or mapping data, 28 which indicates, for each of the modes, a correspondence (mapping) between the mode and the response data 26A, 26B which should be sent to a card reader when the secure element 20 is interrogated for information about applications supported by the card. The indication 29 of the mode selected by the user and the correspondence data 28 may be stored within a functional block 27 which will be called a user interface Application 27, or an LED Card Interface (LCI) Application 27. The LCI Application 27 has an Application Identifier (AID) which is different to the AIDs of other applications on the secure element 20. The user interface processor 31 can communicate with the LCI Application 27 by sending an APDU with the AID of the LCI Application 27.

Communication between the user interface section 30 and the secure element 20 provides an indication of the mode selected by the user via the user interface 35. The indication is stored 29 at the secure element 20. When the card is interrogated by an external reader 50, the card responds by providing response data for the applications associated with the mode which has been selected by a user at that time. Correspondence data 28 also indicates which external interface 12, 14 should be enabled for each user-selectable mode. By controlling when the external interface(s) of the card are enabled, the card prevents unwanted interrogation.

An advantage of operating in this way is that the user interface section 30 is fully isolated from the details of the different payment system environments. The user interface section 30 interacts with a single functional block (the LCI application) 27 on the secure element 20. The mapping of the operating mode to a payment application is held in the LCI application 27, within the secure environment of the secure element 20. This arrangement means that there is no requirement for the user interface section 30 to hold any information about the particular payment applications running on the secure element, such as the AID (application identifier) or cryptographic keys required in order to access payment application files. When a user selects a different application at the user interface, there is no change to data stored at the secure element, other than to store a new value of the mode selected by the user. The LCI application 27 points to existing data stored in the data structures 26A, 26B. There is no need to modify the data structures 26A, 26B. The Payment System Directory 26A under PSE and the File Control Information template 26B under PPSE can be conventional.

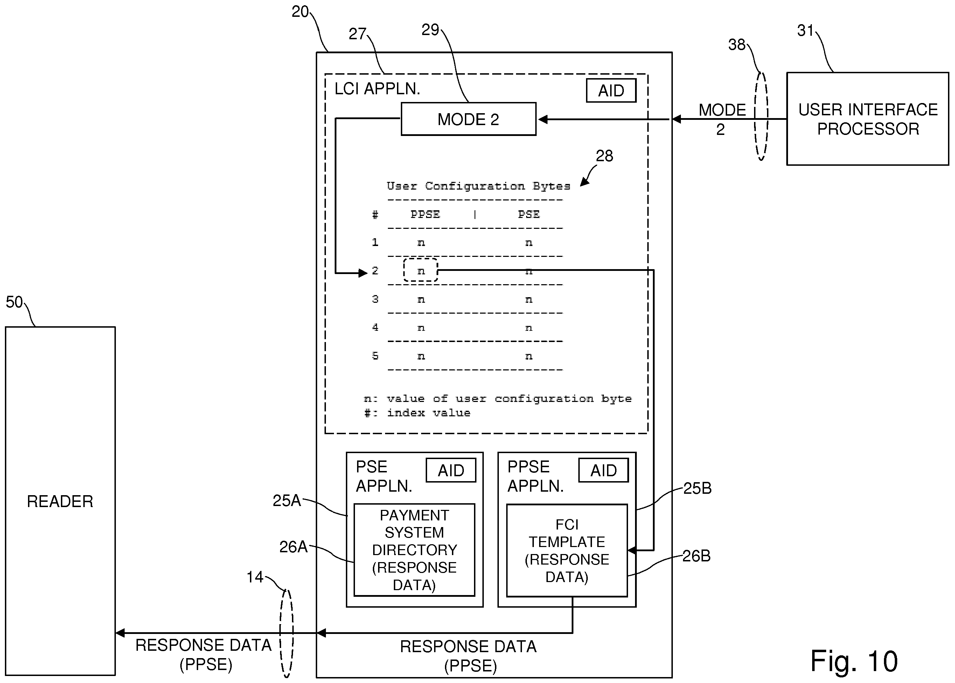

For completeness, Figure 10 shows an overview of the application selection process. In this example, a user makes a selection of operating mode 2 by operating the user interface. The user interface processor 31 signals to the secure element 20, via the internal interface 38, that mode 2 has been selected. The user interface processor 31 can send an APDU with the AID of the LCI Application 27. The secure element 20 stores an indication 29 that operating mode 2 was selected. Operating mode 2 corresponds to application 2 supported by the card, such as a debit application or some other application that the user wishes to use. The card is subsequently interrogated by a card reader 50. In this example, it is assumed that a contactless reader interrogates the card via a contactless external interface 14. The communication exchange detailed in Figure 5A occurs. When the secure element 20 is asked to supply details of the applications it supports, the secure element 20 responds with details of the application selected by the user (= application 2). This occurs by performing a look up in the table 28 of correspondence data, using the user-selected mode (2) as an index in the table 28. An entry in the table 28 at row 2 and column PPSE indicates a value n. Value n is used as an index to select a template to send in the response to the card reader 50. In this way, the card reader 50 only receives details of the application that the user wishes to use, and does not receive details of other applications. Therefore, the card reader is prevented from automatically selecting an application which the user does not wish to use. The selection of the application at the card 10 is made without the need to exchange any secure data between the secure element 20 and the user interface section 30 of the card.

Examples have been described in which the card supports a Payment System Environment (PSE) and a Proximity Payment System Environment (PPSE). The table of correspondence data 28 shown in Figure 10 has two columns corresponding to PSE and PPSE. In other examples, the card may only support PSE or PPSE. The table shown in Figure 10 may be simplified to a single column.

Figure 1 shows a card 10 with a secure element 20 and a user interface section 30 embedded within the card 10. In another possible example, the secure element is hosted by an electronic device, such as a smart phone. The user interface section can be provided by user interface functionality of the host device, such as a graphical user interface (GUI) or a touch screen user interface. The functionality of the user interface may be provided by a processor which performs other tasks for the host device, rather than a dedicated user interface processor 31 as shown in Figure 1. The user interface of the host device allows a user to select an operating mode for the secure element. In a similar way to described above, the user interface section of the host device can communicate to the secure element an indication of a mode selected by the user at the user interface. Operation of the secure element is the same as described above.

The steps of the methods described herein may be carried out in any suitable order, or simultaneously where appropriate.

Modifications and other embodiments of the disclosed invention will come to mind to one skilled in the art having the benefit of the teachings presented in the foregoing descriptions and the associated drawings. Therefore, it is to be understood that the invention is not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A card (10) comprising:
a secure element (20) which is capable of hosting a plurality of applications (23);
an external interface (12, 14) configured to communicate between the secure element (20) and an external card reader (50);
a user interface (35) having a user input element (37) and a plurality of user-selectable modes, where each mode is associated with a number N of the applications (23), where N≥0;
wherein the card (10) is configured to allow a user to select one of the plurality of modes for use within a time-limited usage period, the card being configured to:
detect operation of the user input element (37);
indicate, via the user interface (35), a first mode of the plurality of modes (23) in response to a detected operation of the user input element (37);
select one of the plurality of modes (23) for use during for the time-limited usage period;
enable the external interface (12, 14) for the time-limited usage period; and
disable the external interface (12, 14) at an end of the time-limited usage period, **characterized in that** the card is configured to:
detect an end of a communication transaction between the card and the external card reader; and
disable the at least one external interface (12, 14) when the end of the communication transaction has been detected.

2. A card according to claim 1 wherein the first mode is a mode which was selected during a previous usage period.

3. A card according to claim 2 wherein the card (10) is configured to:
detect a second operation of the user input element (37); and
if no second operation of the user input element (37) is detected, to select the first mode for use within the time-limited usage period.

4. A card according to claim 3 wherein the card (10) is configured to:
detect a second operation of the user input element (37); and
if a second operation of the user input element (37) is detected to indicate, via the user interface (35), a different one of the plurality of modes for use during the time-limited usage period.

5. A card according to claim 4 wherein the card (10) is configured to:
if the second operation of the user input element (37) is detected, to:
indicate a different one of the plurality of modes for use during the time-limited usage period;
wait for operation of the user input element (37);
if no operation of the user input element (37) is detected, to select that mode for use during the time-limited usage period.

6. A card according to claim 4 wherein the card (10) is configured to:
if the second operation of the user input element (37) is detected, to begin an automated sequence through the plurality of modes (23), the automated sequence comprising:
indicating, via the user interface (35), one of the plurality of modes for use during the time-limited usage period;
waiting for operation of the user input element (37);
if operation of the user input element (37) is detected, selecting that mode for use during the time-limited usage period.

7. A card according to any one of the preceding claims wherein each mode is associated with a single one of the applications.

8. A card according to claims 1 to 6 wherein the card has a contact external interface and a contactless external interface, and each mode is associated with:
a number N_{CT} of the applications for use by the contact external interface in that mode, where N_{CT}≥0; and
a number N_{CTL} of the applications for use by the contactless external interface in that mode, where N_{CTL}≥0.

9. A card according to any one of the preceding claims wherein the card has a contact external interface and a contactless external interface and the card is configured to enable at least one of the contact external interface (12) and the contactless external interface (14) per mode.

10. A card according to any one of the preceding claims wherein the card is configured to send response data corresponding to the number N of applications associated with the selected mode when the card is interrogated by the external reader (50).

11. A method of operating a card comprising a secure element (20), at least one external interface (12, 14) for communicating between the secure element and an external card reader (50), and a user interface (35) with a user input element (37), the method comprising:
hosting plurality of applications (23) on the secure element (20);
detecting operation of the user input element (37);
indicating, via the user interface (35), a first mode in response to a detected operation of the user input element (37), wherein there is a plurality of user-selectable modes, each mode associated with a number N of the applications (23), where N≥0;
selecting one of the plurality of modes (23) for use during for the time-limited usage period;
enabling the external interface (12, 14) for the time-limited usage period; and
disabling the external interface (12, 14) at an end of the time-limited usage period,
the method further comprising:
detecting an end of a communication transaction between the card and the external card reader; and
disabling the at least one external interface (12, 14) when the end of the communication transaction has been detected.

12. A method according to claim 11 wherein the first mode is a mode which was selected during a previous usage period.

13. A method according to claim 11 or 12 further comprising:
detecting a second operation of the user input element (37); and
if a second operation of the user input element (37) is detected indicating, via the user interface (35), a different one of the plurality of modes for use during the time-limited usage period.

14. A method according to any one of claims 11 to 13 wherein the card has a contact external interface and a contactless external interface and the method comprises enabling at least one of the contact external interface (12) and the contactless external interface (14) per mode.

## Patentansprüche

1. Karte (10), die Folgendes umfasst:
ein sicheres Element (20), das zum Hosten einer Vielzahl von Anwendungen (23) in der Lage ist;
eine externe Schnittstelle (12, 14), die dazu ausgelegt ist, zwischen dem sicheren Element (20) und einem externen Kartenleser (50) zu kommunizieren;
eine Benutzerschnittstelle (35), die ein Benutzereingabeelement (37) und eine Vielzahl von benutzerauswählbaren Modi aufweist, wo jeder Modus mit einer Anzahl N der Anwendungen (23) verknüpft ist, wo N≥0;
wobei die Karte (10) dazu ausgelegt ist, es einem Benutzer zu erlauben, einen der Vielzahl von Modi zur Verwendung in einer zeitbegrenzten Nutzungsperiode auszuwählen, wobei die Karte zu Folgendem ausgelegt ist:
Detektieren der Betätigung des Benutzereingabeelements (37) ;
Anzeigen eines ersten Modus der Vielzahl von Modi (23) via die Benutzerschnittstelle (35) in Reaktion auf eine detektierte Betätigung des Benutzereingabeelements (37);
Auswählen von einem der Vielzahl von Modi (23) zur Verwendung während der zeitbegrenzten Nutzungsperiode;
Aktivieren der externen Schnittstelle (12, 14) für die zeitbegrenzte Nutzungsperiode; und
Deaktivieren der externen Schnittstelle (12, 14) an einem Ende der zeitbegrenzten Nutzungsperiode,
**dadurch gekennzeichnet, dass** die Karte zu Folgendem ausgelegt ist:
Detektieren eines Endes einer Kommunikationstransaktion zwischen der Karte und dem externen Kartenleser; und
Deaktivieren der mindestens einen externen Schnittstelle (12, 14), wenn das Ende der Kommunikationstransaktion detektiert wurde.

2. Karte nach Anspruch 1, wobei der erste Modus ein Modus ist, der während einer vorherigen Nutzungsperiode ausgewählt wurde.

3. Karte nach Anspruch 2, wobei die Karte (10) zu Folgendem ausgelegt ist:
Detektieren einer zweiten Betätigung des Benutzereingabeelements (37); und
wenn keine zweite Betätigung des Benutzereingabeelements (37) detektiert wird, Auswählen des ersten Modus zur Verwendung in der zeitbegrenzten Nutzungsperiode.

4. Karte nach Anspruch 3, wobei die Karte (10) zu Folgendem ausgelegt ist:
Detektieren einer zweiten Betätigung des Benutzereingabeelements (37); und
wenn eine zweite Betätigung des Benutzereingabeelements (37) detektiert wird, Anzeigen eines anderen der Vielzahl von Modi via die Benutzerschnittstelle (35) zur Verwendung während der zeitbegrenzten Nutzungsperiode.

5. Karte nach Anspruch 4, wobei die Karte (10) zu Folgendem ausgelegt ist:
wenn die zweite Betätigung des Benutzereingabeelements (37) detektiert wird:
Anzeigen eines anderen der Vielzahl von Modi zur Verwendung während der zeitbegrenzten Nutzungsperiode;
Warten auf eine Betätigung des Benutzereingabeelements (37) ;
wenn keine Betätigung des Benutzereingabeelements (37) detektiert wird, Auswählen dieses Modus zur Verwendung während der zeitbegrenzten Nutzungsperiode.

6. Karte nach Anspruch 4, wobei die Karte (10) zu Folgendem ausgelegt ist:
wenn die zweite Betätigung des Benutzereingabeelements (37) detektiert wird, Beginnen einer automatisierten Sequenz durch die Vielzahl von Modi (23), wobei die automatisierte Sequenz Folgendes umfasst:
Anzeigen eines der Vielzahl von Modi zur Verwendung während der zeitbegrenzten Nutzungsperiode via die Benutzerschnittstelle (35);
Warten auf eine Betätigung des Benutzereingabeelements (37) ;
wenn eine Betätigung des Benutzereingabeelements (37) detektiert wird, Auswählen dieses Modus zur Verwendung während der zeitbegrenzten Nutzungsperiode.

7. Karte nach einem der vorhergehenden Ansprüche, wobei jeder Modus mit einer einzigen der Anwendungen verknüpft ist.

8. Karte nach einem der Ansprüche 1 bis 6, wobei die Karte eine externe Schnittstelle mit Kontakten und eine externe Schnittstelle ohne Kontakte aufweist und jeder Modus mit Folgendem verknüpft ist:
einer Anzahl N_{CT} von Anwendungen zur Verwendung durch die externe Schnittstelle mit Kontakten in diesem Modus, wo N_{CT}≥0; und
einer Anzahl N_{CTL} von Anwendungen zur Verwendung durch die externe Schnittstelle ohne Kontakte in diesem Modus, wo N_{CTL}≥0.

9. Karte nach einem der vorhergehenden Ansprüche, wobei die Karte eine externe Schnittstelle mit Kontakten und eine externe Schnittstelle ohne Kontakte aufweist und die Karte dazu ausgelegt ist, mindestens eine der externen Schnittstelle (12) mit Kontakten und der externen Schnittstelle (14) ohne Kontakte je Modus zu aktivieren.

10. Karte nach einem der vorhergehenden Ansprüche, wobei die Karte dazu ausgelegt ist, Antwortdaten zu senden, die der Anzahl von N Anwendungen entsprechen, die mit dem ausgewählten Modus verknüpft sind, wenn die Karte vom externen Leser (50) abgefragt wird.

11. Verfahren zum Betreiben einer Karte, die ein sicheres Element (20), mindestens eine externe Schnittstelle (12, 14) zum Kommunizieren zwischen dem sicheren Element und einem externen Kartenleser (50) und eine Benutzerschnittstelle (35) mit einem Benutzereingabeelement (37) umfasst, wobei das Verfahren Folgendes umfasst:
Hosten einer Vielzahl von Anwendungen (23) auf dem sicheren Element (20);
Detektieren der Betätigung des Benutzereingabeelements (37) ;
Anzeigen eines ersten Modus via die Benutzerschnittstelle (35) in Reaktion auf eine detektierte Betätigung des Benutzereingabeelements (37), wobei es eine Vielzahl von benutzerauswählbaren Modi gibt, wobei jeder Modus mit einer Anzahl N der Anwendungen (23) verknüpft ist, wo N≥0;
Auswählen von einem der Vielzahl von Modi (23) zur Verwendung während der zeitbegrenzten Nutzungsperiode;
Aktivieren der externen Schnittstelle (12, 14) für die zeitbegrenzte Nutzungsperiode; und
Deaktivieren der externen Schnittstelle (12, 14) an einem Ende der zeitbegrenzten Nutzungsperiode,
wobei das Verfahren ferner Folgendes umfasst:
Detektieren eines Endes einer Kommunikationstransaktion zwischen der Karte und dem externen Kartenleser; und
Deaktivieren der mindestens einen externen Schnittstelle (12, 14), wenn das Ende der Kommunikationstransaktion detektiert wurde.

12. Verfahren nach Anspruch 11, wobei der erste Modus ein Modus ist, der während einer vorherigen Nutzungsperiode ausgewählt wurde.

13. Verfahren nach Anspruch 11 oder 12, das ferner Folgendes umfasst:
Detektieren einer zweiten Betätigung des Benutzereingabeelements (37); und
wenn eine zweite Betätigung des Benutzereingabeelements (37) detektiert wird, Anzeigen eines anderen der Vielzahl von Modi via die Benutzerschnittstelle (35) zur Verwendung während der zeitbegrenzten Nutzungsperiode.

14. Verfahren nach einem der Ansprüche 11 bis 13, wobei die Karte eine externe Schnittstelle mit Kontakten und eine externe Schnittstelle ohne Kontakte aufweist und das Verfahren das Aktivieren von mindestens einer der externen Schnittstelle (12) mit Kontakten und der externen Schnittstelle (14) ohne Kontakte je Modus umfasst.

## Revendications

1. Carte (10) comprenant :
un élément sécurisé (20) qui est en mesure d'héberger une pluralité d'applications (23) ;
un interface externe (12, 14) configurée pour communiquer entre l'élément sécurisé (20) et un lecteur externe (50) de carte ;
une interface utilisateur (35) ayant un élément d'entrée utilisateur (37) et une pluralité de modes sélectionnables par l'utilisateur, où chaque mode est associé à un nombre N d'applications (23), où N ≥ 0 ;
dans laquelle la carte (10) est configurée pour permettre à un utilisateur de sélectionner l'un de la pluralité de modes pour une utilisation dans une période d'utilisation limitée dans le temps, la carte étant configurée pour :
détecter une opération de l'élément d'entrée utilisateur (37) ;
indiquer, via l'interface utilisateur (35), un premier mode de la pluralité de modes (23) en réponse à une opération détectée de l'élément d'entrée utilisateur (37) ;
sélectionner l'un de la pluralité de modes (23) pour une utilisation pendant la période d'utilisation limitée dans le temps ;
activer l'interface externe (12, 14) pendant la période d'utilisation limitée dans le temps ; et
désactiver l'interface externe (12, 14) à la fin de la période d'utilisation limitée dans le temps,
**caractérisée en ce que** la carte est configurée pour :
détecter la fin d'une transaction de communication entre la carte et le lecteur de carte externe ; et
désactiver la au moins une interface externe (12, 14) lorsque la fin de la transaction de communication a été détectée.

2. Carte selon la revendication 1 dans laquelle le premier mode est un mode qui a été sélectionné pendant une période d'utilisation précédente.

3. Carte selon la revendication 2 dans laquelle la carte (10) est configurée pour :
détecter une deuxième opération de l'élément d'entrée utilisateur (37) ; et
si aucune deuxième opération de l'élément d'entrée utilisateur (37) n'est détectée, pour sélectionner le premier mode pour une utilisation dans la période d'utilisation limitée dans le temps.

4. Carte selon la revendication 3 dans laquelle la carte (10) est configurée pour :
détecter une deuxième opération de l'élément d'entrée utilisateur (37) ; et
si une deuxième opération de l'élément d'entrée utilisateur (37) est détectée, pour indiquer, via l'interface utilisateur (35), un mode différent de la pluralité de modes pour une utilisation pendant la période d'utilisation limitée dans le temps.

5. Carte selon la revendication 4, dans laquelle la carte (10) est configurée pour :
si la deuxième opération de l'élément d'entrée utilisateur (37) est détectée :
indiquer un mode différent de la pluralité de modes pour une utilisation pendant la période d'utilisation limitée dans le temps ;
attendre une opération de l'élément d'entrée utilisateur (37) ;
si aucune opération de l'élément d'entrée utilisateur (37) n'est détectée, pour sélectionner ce mode pour une utilisation pendant la période d'utilisation limitée dans le temps.

6. Carte selon la revendication 4, dans laquelle la carte (10) est configurée pour :
si la deuxième opération de l'élément d'entrée utilisateur (37) est détectée, commencer une séquence automatisée à travers la pluralité de modes (23), la séquence automatisée comprenant les étapes consistant à :
indiquer, via l'interface utilisateur (35), l'un de la pluralité de modes pour une utilisation pendant la période d'utilisation limitée dans le temps ;
attendre une opération de l'élément d'entrée utilisateur (37) ;
si l'opération de l'élément d'entrée utilisateur (37) est détectée, sélectionner ce mode pour une utilisation pendant la période d'utilisation limitée dans le temps.

7. Carte selon l'une quelconque des revendications précédentes, dans laquelle chaque mode est associé à une seule des applications.

8. Carte selon les revendications 1 à 6, dans laquelle la carte a une interface externe avec contact et une interface externe sans contact, et chaque mode est associé à :
un nombre N_{CT} des applications pour une utilisation par l'interface externe avec contact dans ce mode, où N_{CT} ≥ 0 ; et
un nombre N_{CTL} des applications pour une utilisation par l'interface externe sans contact dans ce mode, où N_{CTL} ≥ 0.

9. Carte selon l'une quelconque des revendications précédentes, dans laquelle la carte a une interface externe avec contact et une interface externe sans contact, et la carte est configurée pour activer au moins l'une parmi l'interface externe avec contact (12) et l'interface externe sans contact (14) par mode.

10. Carte selon l'une quelconque des revendications précédentes, dans laquelle la carte est configurée pour envoyer des données de réponse correspondant au nombre N d'applications associées au mode sélectionné lorsque la carte est interrogée par le lecteur externe (50).

11. Procédé d'exploitation d'une carte comprenant un élément sécurisé (20), au moins une interface externe (12, 14) pour communiquer entre l'élément sécurisé et un lecteur externe (50) de carte, et une interface utilisateur (35) avec un élément d'entrée utilisateur (37), le procédé comprenant les étapes consistant à :
héberger une pluralité d'applications (23) sur l'élément sécurisé (20) ;
détecter une opération de l'élément d'entrée utilisateur (37) ;
indiquer, via l'interface utilisateur (35), un premier mode en réponse à une opération détectée de l'élément d'entrée utilisateur (37), dans lequel il existe une pluralité de modes sélectionnables par l'utilisateur, chaque mode étant associé à un nombre N d'applications (23), où N ≥ 0 ;
sélectionner l'un de la pluralité de modes (23) pour une utilisation pendant la période d'utilisation limitée dans le temps ;
activer l'interface externe (12, 14) pendant la période d'utilisation limitée dans le temps ; et
désactiver l'interface externe (12, 14) à la fin de la période d'utilisation limitée dans le temps,
le procédé comprenant en outre les étapes consistant à :
détecter une fin d'une transaction de communication entre la carte et le lecteur de carte externe ; et
désactiver la au moins une interface externe (12, 14) lorsque la fin de la transaction de communication a été détectée.

12. Procédé selon la revendication 11 dans lequel le premier mode est un mode qui a été sélectionné pendant une période d'utilisation précédente.

13. Procédé selon la revendication 11 ou 12 comprenant en outre les étapes consistant à :
détecter une deuxième opération de l'élément d'entrée utilisateur (37) ; et
si une deuxième opération de l'élément d'entrée utilisateur (37) est détectée, indiquer via l'interface utilisateur (35), un mode différent de la pluralité de modes pour une utilisation pendant la période d'utilisation limitée dans le temps.

14. Procédé selon l'une quelconque des revendications 11 à 13, dans lequel la carte a une interface externe avec contact et une interface externe sans contact, et le procédé comprend l'activation d'au moins une parmi l'interface externe avec contact (12) et l'interface externe sans contact (14) par mode.
